(19) Europäisches Patentamt

European Patent Office

Office européen des brevets

(11) Veröffentlichungsnummer: **0 133 623**
**B1**

(12) **EUROPÄISCHE PATENTSCHRIFT**

(45) Veröffentlichungstag der Patentschrift:
**07.01.88**

(21) Anmeldenummer: **83108005.6**

(22) Anmeldetag: **12.08.83**

(51) Int. Cl.⁴: **F 16 K 47/10,** F 16 K 17/30,
G 05 D 7/01

(54) **Strombegrenzungsventil.**

(43) Veröffentlichungstag der Anmeldung:
**06.03.85 Patentblatt 85/10**

(45) Bekanntmachung des Hinweises auf die Patenterteilung:
**07.01.88 Patentblatt 88/1**

(84) Benannte Vertragsstaaten:
**AT BE CH DE FR GB IT LI LU NL SE**

(56) Entgegenhaltungen:
**DE - A - 2 408 422**
**GB - A - 1 106 359**
**GB - A - 2 108 242**
**US - A - 922 578**
**US - A - 3 120 243**
**US - A - 3 339 580**

(73) Patentinhaber: **Hellmeier & Weinlein Fabrik für Oel-Hydraulik GmbH & Co. KG, Neumarkter Strasse 26, D-8000 München 80 (DE)**

(72) Erfinder: **Brunner, Rudolf, Wankstrasse 23, D-8011 Baldham (DE)**

(74) Vertreter: **Patentanwälte Grünecker, Dr. Kinkeldey, Dr. Stockmair, Dr. Schumann, Jakob, Dr. Bezold, Meister, Hilgers, Dr. Meyer-Plath, Maximilianstrasse 58, D-8000 München 22 (DE)**

**Beschreibung**

Die Erfindung betrifft ein Strombegrenzungsventil der im Oberbegriff des Patentanspruchs 1 angegebenen Art.

Bei einem aus der US-A-3 120 243 bekannten Strombegrenzungsventil dieser Art verläuft der ungedrosselte Strömungsweg vom einen Teil des Strömungsdurchganges über den ersten Gehäuseauslass zur Gehäusebohrung, von dieser durch den Regelkolben und schliesslich über die Messblende des Regelkolbens zum anderen Teil des Strömungsdurchganges. Der ungedrosselte Strömungsweg entspricht daher weitgehend dem Strömungsweg für den geregelten Durchfluss, so dass sich eine unzweckmässige Drosselung beim ungeregelten Durchfluss nicht vermeiden lässt. Der Aufbau des bekannten Strombegrenzungsventils ist vielteilig und kompliziert, vor allem deshalb, weil das Gehäuse zweiteilig und im Strömungsdurchgang an zwei in Axialrichtung beabstandeten Bereichen festgelegt ist.

Ein aus der DE-A-2 480 422 bekanntes Strombegrenzungsventil enthält einen verhältnismässig kompliziert aufgebauten Regelkolben und besteht aus vielen Einzelteilen. Zudem besteht bei ihm die Gefahr, dass das eigenbewegliche Element, das innerhalb des Regelkolbens angeordnet ist, hängen bleibt, wodurch das Strombegrenzungsventil funktionsunfähig wird.

Der Erfindung liegt die Aufgabe zugrunde, ein Strombegrenzungsventil der eingangs genannten Art zu schaffen, das aus wenigen Einzelteilen besteht und sich durch einen ausserordentlich geringen Strömungswiderstand für den ungeregelten Durchfluss auszeichnet.

Die gestellte Aufgabe wird erfindungsgemäss durch die im kennzeichnenden Teil des Patentanspruchs 1 enthaltenen Merkmalskombination gelöst.

Das Strombegrenzungsventil besteht bei dieser Ausbildung aus wenigen, einfach und preiswert herstellbaren und zusammenzubauenden Einzelteilen. Da der ungedrosselte Strömungsweg den Regelkolben umgeht, steht dem ungeregelten Durchfluss nur ein vernachlässigbarer Strömungswiderstand entgegen, obwohl das Strombegrenzungsventil bei mengengeregeltem Durchfluss sehr feinfühlig reagiert.

Zweckmässige Ausführungsformen gehen aus den Unteransprüchen hervor.

Anhand der Zeichnung werden Ausführungsformen des Erfindungsgegenstandes erläutert. Es zeigen:

Figur 1 einen schematischen Längsschnitt durch eine erste Ausführungsform eines Strombegrenzungsventils bei zwei unterschiedlichen Stellungen des Regelkolbens,

Figur 2 a) die obere Hälfte eines Längsschnittes durch die Ausführungsform von Figur 1; in einer weiteren Stellung des Regelkolbens,

b) die untere Hälfte eines Längsschnittes durch eine weitere Ausführungsform eines Strombegrenzungsventils,

Figur 3 eine weitere Ausführungsform eines Strombegrenzungsventils im Längsschnitt und in einer bestimmten Stellung des Regelkolbens, und

Figur 4 eine dem Längsschnitt von Figur 3 entsprechende Darstellung bei einer anderen Stellung des Regelkolbens.

Ein Strombegrenzungsventil (1), insbesondere ein Senkbremsventil für einen einseitig beaufschlagbaren Hubzylinder in der Hochdruck-Hydraulik, ist in einen Strömungsdurchgang (2) abgedichtet eingesetzt, der mit einem Zylinderraum (3) eines einseitig beaufschlagbaren Kolbens (4) eines Hubzylinders verbunden ist, gegen den in Richtung eines Pfeiles (5) eine Last drückt.

Das Strombegrenzungsventil (1) ist mit seinem Gehäuse (6) in den Strömungsdurchgang (2) eingeschraubt. Es wäre aber auch möglich, das Gehäuse (6) so auszubilden, dass es einen Ventilkörper definiert, in dem der Strömungsdurchgang (2) dann angeordnet ist.

Das Gehäuse (6) ist von topfförmiger Gestalt und besitzt einen Topfboden (7), bis zu dem eine Gehäusebohrung (8) verläuft, die eine Zylinderlaufbahn definiert, die am Ende durch einen herausnehmbaren Anschlagring (9) begrenzt wird. Die Gehäusebohrung (8) besitzt eine Verlängerung (10) am dem Topfboden abgewandten Ende.

Am Topfboden (7) stützt sich mit ihrem ersten Ende (11a) eine Druckfeder (11) ab, die mit ihrem zweiten Ende (11b) in der in ausgezogenen Linien gezeigten Darstellung an einem Topfboden (20) eines topfförmigen Regelkolbens (19) anliegt.

Das Gehäuse (6) besitzt einen Aussengewindeabschnitt (13) an einer umlaufenden Verdickung (14), mit der sie in den Strömungsdurchgang (2) derart eingeschraubt ist, dass dieser in zwei Teile (2a und 2b) unterteilt wird.

Von beiden Seiten der Verdickung (14) führen Gehäuseauslässe (15, 17) zu Ringkammern (16, 18), die zur Gehäusebohrung (8) hin offen sind, und in einem gegenseitigen, axialen Abstand liegen.

Der Regelkolben (19) sitzt abgedichtet verschieblich in der Gehäusebohrung (8) und weist mit seinem offenen Ende (Regelkante 22) dem Topfboden (7) zu. In seinem Topfboden (20) besitzt der Regelkolben (19) eine sogenannte Messblende (21), d.h. einen Durchgang mit begrenzter Querschnittsfläche.

Bei dieser Ausführungsform ist die Feder (11) so ausgelegt, dass die Stellung des in ausgezogenen Linien gezeichneten Endes (11b) die entspannte Lage darstellt. Mit ihrem ersten Ende (11a) ist die Feder (11) beispielsweise im Bereich des Topfbodens (17) festgeklemmt. Im Bereich des Topfbodens (7) könnte auch eine Verstelleinrichtung für die vorgespannte Feder (11) vorgesehen sein.

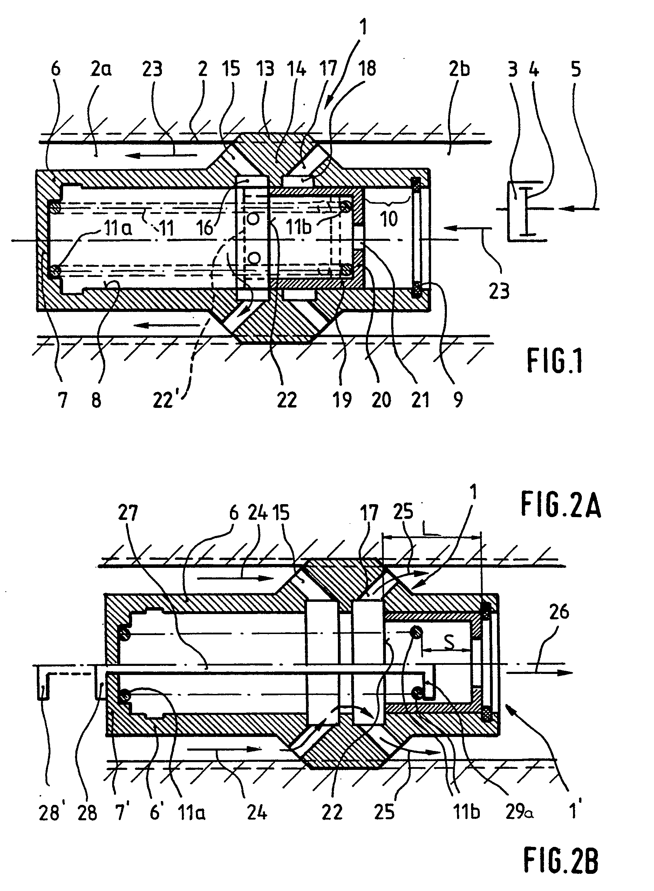

Ausgehend von einer Stellung des Kolbens (4), in der dieser unbelastet ist, steht der Regelkolben (19) des Strombegrenzungsventils (1) in der in Figur 1 in ausgezogenen Linien gezeigten Stellung, in die ihn die Feder (11) gebracht hat, und in der er mit seiner Regelkante (22) gerade mit der Ringkammer (16) abschliesst. Sobald nun die Last (5) auf den Kolben (4) einwirkt, strömt das Hydraulikfluid in Richtung eines Pfeiles (23) in den Teil (2b) des Strömungsdurchganges (2) ein. Die Gehäuseauslässe (17) und die Ringkammer (18) werden vom Aussenumfang des Regelkolbens (19) verschlossen, so dass das Hydraulikfluid nur durch die Messblende (21) ein- und über die Ringkammer (16) und die Gehäuseauslässe (15) in den Teil (2a) Strömungsdurchgang ausströmen kann. Über die Messblende (21) entsteht ein Druckgefälle, das eine in Richtung des Pfeiles (23) gerichtete Stellkraft am Regelkolben (19) erzeugt, mit der dieser (strichliert angedeutet) gegen die Kraft der Feder (11) verschoben wird und dabei mit seiner Regelkante (22) in die Position (22') gelangt und mit der Ringkammer (16) blendenartig so zusammenarbeitet, dass dort nur eine vorbestimmte Fluidmenge durchgeht. In Abhängigkeit von dem durch die Last (5) verursachten Druck übt der Regelkolben (19) eine Arbeitsspielbewegung aus, bei der er stets dafür sorgt, dass die abströmende Hydraulikfluidmenge konstant bleibt. Durch die Grösse der Messblende (21) und die Auslegung der Feder (11) kann diese Durchflussmenge vorbestimmt werden.

In Figur 2a, die die obere Hälfte des Strombegrenzungsventils (1) von Figur 1 erneut zeigt, tritt im Teil (2a) des Strömungsdurchganges (2) eine in Richtung der Pfeile (24) verlaufende Strömung auf, durch die der Kolben (4) ausgefahren werden soll. Dabei ist es wichtig, dass das Strombegrenzungsventil (1) dieser Strömung einen möglichst geringen Widerstand entgegensetzt, und zwar unabhängig davon, ob der Kolben (4) belastet ist, oder nicht. Das Hydraulikfluid aus dem Teil (2a) des Strömungsdurchganges (2) tritt durch die Gehäuseauslässe (15) in die Ringkammer (16) ein und strömt in der in Figur 1 in ausgezogenen Linien gezeigten Stellung des Regelkolbens (19) zunächst nur durch die Messblende (21) in Richtung zum Zylinderraum (3). Dabei entsteht wiederum eine Druckdifferenz über die Messblende, die auf den Regelkolben (19) eine in Richtung eines Pfeiles (26) verlaufende Kraft ausübt. Die Ringkammer (18) und die Gehäuseauslässe (17) sind zu diesem Zeitpunkt noch durch den Mantel des Regelkolbens (19) abgedeckt. Die am Regelkolben (19) wirkende Kraft verschiebt diesen in den Bereich der Verlängerung (10) hinein, bis er schliesslich an dem Anschlagring (9) zur Anlage kommt. Die Regelkante (22) schliesst dann in etwa mit dem Rand der Ringkammer (18) ab, wodurch ein im wesentlichen ungedrosselter Durchgang der Strömung durch die Gehäuseauslässe (17) frei geworden ist. Das Hydraulikfluid strömt dann durch die Gehäuseauslässe (17) (Pfeil 25) und auch durch die Messblende (21) zum Zylinderraum (3), so dass der Regelkolben (19) zuverlässig im Bereich der Verlängerung (10) gehalten bleibt. Die axiale Länge (L) des Regelkolbens ist annähernd genauso gross wie der axiale Abstand zwischen dem Anschlagring (9) und der Begrenzung der Ringkammer (18). Zwischen dem zweiten Ende (11b) der Feder (11) und dem Topfboden (20) des Regelkolbens (19) liegt dann ein Abstand (s) vor, so dass die Feder (11) bei der Bewegung des Regelkolbens in diese Passivstellung keinen Einfluss auf den Regelkolben zu nehmen vermag. Der Gesamtquerschnitt der Gehäuseauslässe (17) ist grösser, als die Querschnittsfläche der Messblende (21).

Sobald die Strömung in Richtung der Pfeile (24, 25 und 26) aufhört und der Kolben (4) unter der Last (5) wieder zurückbewegt wird, tritt erneut eine Strömung in Richtung der Pfeile (23, Figur 1) auf, die im Bereich der Messblende (21) dank einer Druckdifferenz eine in Richtung der Pfeile (23) verlaufende Kraft am Regelkolben (19) erzeugt, durch welche dieser wieder in die in Figur 1 in ausgezogenen Linien dargestellte Stellung verschoben wird, und zwar ohne dass die Feder (11) darauf Einfluss hätte. Da bei dieser Bewegung des Regelkolbens (19) aus seiner Passivstellung heraus die Ringkammer (18) wieder verschlossen wird, findet nur mehr eine Strömung durch die Messblende (21) statt, die dann in Zusammenwirkung mit der Feder (11) wieder zur vorerwähnten Arbeitsspielbewegung des Regelkolbens (19) mit der Durchflussmengenregelung führt.

Figur 2b ist eine abgeänderte Ausführungsform eines Strombegrenzungsventils (1'), die im wesentlichen mit der der Figuren 1 und 2a übereinstimmt. Unterschiedlich ist nur, dass im Topfboden (7') des Gehäuses (6') eine Zugstange (27) verschiebbar geführt ist, die einen aussenliegenden Anschlag (28) sowie einen hinter das zweite Ende (11b) der Feder (11) greifenden Anschlag (29a) besitzt. Mit dieser Zugstange (27) wird eine Bewegung des zweiten Endes (11b) der Feder auf die Passivstellung des Regelkolbens zu verhindert, selbst wenn die Feder (11) unter einer höheren Vorspannung steht und dem Regelkolben bei seinen Bewegungen in Passivstellung folgen würde. Sobald die Regelkante (22) am Ende der Ringkammer (18) angelangt ist, schlägt der Anschlag (28) am Topfboden (7') an, wodurch der Anschlag (29a) das zweite Ende (11b) der Feder (11) abfängt. Bei den Arbeitspielbewegungen des Regelkolbens (19) wird die Zugstange (27) hingegen durch den Topfboden (7') durchgeschoben, so dass der Anschlag (28) beispielsweise in die Position (28') gelangt. Es liegt auf der Hand, dass der Anschlag (28) mit der Zugstange (27) verstellbar verbunden sein kann, wodurch sich die Vorspannung der Feder (11) bzw. ihre Wirklänge verändern liesse.

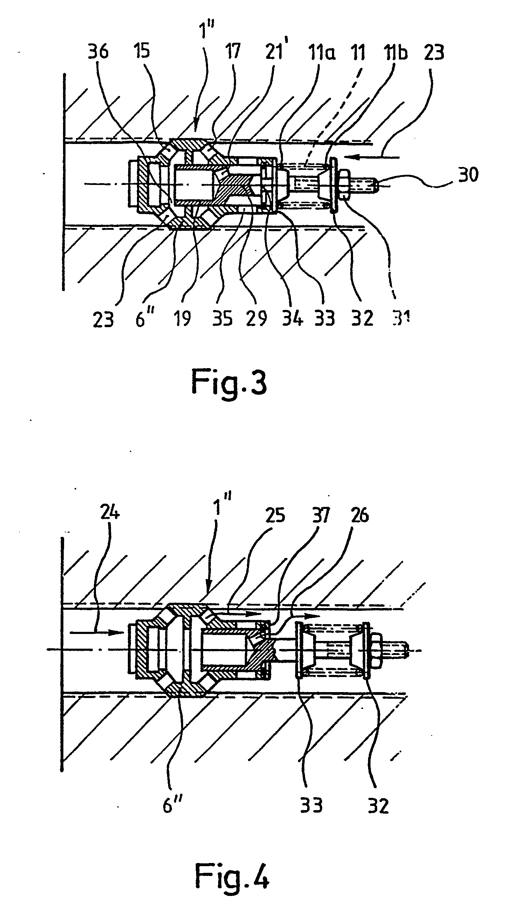

In Figur 3 und 4 ist eine weitere Ausführungsform eines Strombegrenzungsventils (1") erkennbar, dessen Gehäuse (6") kürzer und gedrungener ist, als das Gehäuse der vorerwähnten Ausführungsformen. Im Gehäuse (6") ist wiederum der Regelkolben (19) verschiebbar geführt, in dessen Kolbenboden die Messblende (21') als seitlich liegender Durchgang ausgebildet ist. Das Gehäuse (6″) besitzt die Gehäuseauslässe (15 und 17) an beiden Seiten des verdickten und einen Aussengewinde tragenden Gehäuseteils. Am Topfboden des Regelkolbens (19) ist eine Kolbenstange (29) angeformt, die mit einem ein Aussengewinde tragenden Ende (30) aus dem offenen Ende des Gehäuses (6″) herausragt. Auf dem Ende (30) ist eine Mutter (31) aufgeschraubt, die eine Druckscheibe (32) abstützt. Auf der Druckscheibe (32) liegt das zweite Ende (11b) der Feder (11) auf, die sich mit ihrem ersten Ende (11a) an einer entgegengesetzt auf dem Ende (30) angeordneten, an sich verschiebbaren, Druckscheibe (33) abstützt. Die Kolbenstange (29) besitzt eine Schulter (34), die bei einer Bewegung des Regelkolbens (19) in Figur 3 bzw. 4 nach rechts die Druckscheibe (33) mitnimmt, über welche sich die Feder (11) am offenen Ende des Gehäuses (6″) abzustützen vermag. Das Gehäuse besitzt bei dieser Ausbildung ferner radiale Auslässe (35), die dazu dienen, dass das Hydraulikfluid entweder aus der Messblende (21′) zum Zylinderraum des Kolbens oder aus dem Zylinderraum des Kolbens zur Messblende (21′) strömen kann. Mit 36 ist der Blendenspalt angedeutet, der sich zwischen den Gehäuseauslässen (15) bzw. einer innerhalb dieser ausgebildeten Ringkammer und der Regelkante des Regelkolbens (19) ergibt, wenn der Regelkolben (19) in der vorerwähnten Weise seine Arbeitsspielbewegung ausführt, bei der er die Durchflussmenge bei einer Strömung in Richtung des Pfeils (23) regelt. Das offene Ende des Gehäuses (6″, Figur 4) bildet einen Anschlag (37), auf dem das erste Ende (11a) der Feder (11) unter Vermittlung der Druckscheibe (33) bei der Arbeitsspielbewegung des Regelkolbens (19) aufliegt. Sobald der Regelkolben (19) in die in Figur 4 gezeigte Passivstellung in die Verlängerung der Gehäusebohrung verfahren worden ist, hat jedoch die Schulter (34) die Druckscheibe (33) von dem Anschlag (37) abgehoben, so dass die Feder (11) keine Einwirkung mehr auf den Regelkolben hat, sondern zwischen den beiden Druckscheiben (32 und 33) mit ihrer vorbestimmten Vorspannung gehalten wird. Die Vorspannung lässt sich durch Verstellen der Mutter (31) verändern. In Figur 4 findet eine Strömung in Richtung der Pfeile (24, 25 und 26) zum Zylinderraum statt, die wiederum im wesentlichen ungedrosselt ist.

Im übrigen arbeitet das Strombegrenzungsventil gemäss den Figuren 3 und 4 auf die gleiche Weise, wie dies anhand der Figuren 1, 2a und 2b erläutert wurde.

Wenn das Gehäuse des Strombegrenzungsventils nicht in einen Strömungsdurchgang eingeschraubt wird, sondern als Ventilgehäuse mit einem Strömungsdurchgang ausgebildet ist, braucht nur wiederum für die Passivstellung des Regelkolbens eine Verlängerung der Gehäusebohrung vorgesehen und eine Massnahme zur Entkoppelung der Feder getroffen zu sein, damit der Regelkolben seine Passivstellung leichtgängig einnimmt bzw. rasch wieder seine Arbeitsspielbewegung aufnehmen kann.

## Patentansprüche

1. Strombegrenzungsventil (1), insbesondere Senkbremsventil für die Hochdruck-Hydraulik, mit in einer Strömungsrichtung mengengeregeltem und entgegengesetzt ungeregeltem, ungedrosseltem Durchfluss, mit einem in einem zwei Anschlüsse aufweisenden Strömungsdurchgang (2) eingeschraubten topfförmigen Gehäuse (6, 6′, 6″), das den Strömungsdurchgang (2) in zwei Teile (2a, 2b) teilt, mit einem im Gehäuse (6, 6′, 6″) in einer Gehäusebohrung (8) gegen Federkraft begrenzt verschiebbaren Regelkolben (19), der eine Messblende (21, 21′) aufweist und bei geregeltem Durchfluss mit einem ersten Gehäuseauslass (15, 16) von der Gehäusebohrung (8) zum einen Teil (2a) des Strömungsdurchgangs (2) regelblendenartig zusammenarbeitet, und mit einem ungedrosselten Strömungsweg (15, 16, 17, 18), der bei ungeregeltem Durchfluss und in eine Passivstellung verschobenem Regelkolben (19) über beide Teile (2a, 2b) des Strömungsdurchgangs (2) und den ersten Gehäuseauslass (15, 16) verläuft, gekennzeichnet durch die Kombination folgender Merkmale:

a) in einem verdickten Aussengewindeabschnitt (14) des Gehäuses (6, 6′, 6″) ist ein zweiter Gehäuseauslass (17, 18) von der Gehäusebohrung (8) zum anderen Teil (2b) des Strömungsdurchgangs (2) ausgebildet,

b) der zweite Gehäuseauslass (17, 18) ist durch den Regelkolben (19) bei Erreichen seiner Passivstellung freigebbar,

c) in der Passivstellung ist der Regelkolben (19) um einen Abstand (s) von dem ihn bei der Regelbewegung beaufschlagenden Ende (11b) der Feder (11) abgehoben, und

d) der ungedrosselte Strömungsweg (15, 16, 17, 18) umgeht zwischen beiden Teilen (2a, 2b) des Strömungsdurchganges (2) den Regelkolben (19) aussen.

2. Strombegrenzungsventil nach Anspruch 1, dadurch gekennzeichnet, dass das den Regelkolben (19) bei seiner Regelbewegung beaufschlagende Ende (11b) der Feder (11) in Bewegungsrichtung des Regelkolbens auf seine Passivstellung zu an einem, vorzugsweise verstellbaren, Anschlag (29a) abfangbar ist.

3. Strombegrenzungsventil nach Anspruch 2, dadurch gekennzeichnet, dass im Gehäuse (6′) eine Zugstange (27, 28) angeordnet ist, die die Feder (11) durchsetzt und den Anschlag (29a) trägt, und dass die Zugstange (27, 28) entgegengesetzt zur Bewegungsrichtung des Regelkolbens (19) in seine Passivstellung aus dem Gehäuse (6′) ausschiebbar ist.

4. Strombegrenzungsventil nach wenigstens einem der Ansprüche 1 bis 3, dadurch gekennzeichnet, dass am Regelkolben (19) eine aus dem Gehäuse (6″) herausragende Kolbenstange (29) angebracht ist, an der das zweite Ende (11b) der sich mit dem ersten Ende (11a) am Gehäuse (6″) abstützenden Feder (11) abgestützt ist, und dass

das erste Ende (11a) der Feder (11) auf einem Anschlag (33) aufliegt, der bei einer Bewegung des Regelkolbens (19) in Richtung auf seine Passivstellung zu durch einen an der Kolbenstange (29) angeordneten Anschlag (34) mitnehmbar und vom Gehäuse (6″) um den Abstand (s) abhebbar ist.

## Claims

1. A flow limiting valve, particularly a lowering brake valve (1) for a high pressure hydraulic system, for flowrate controlled flow in one direction and uncontrolled, unrestricted flow in the opposite direction, comprising a cup-shaped housing (6, 6′, 6″) screwed into a flow passage (2) having two connection terminals so as to divide said flow passage (2) into two portions (2a, 2b), a control piston (19) mounted in said housing (6, 6′, 6″) for limited displacement in a housing bore (8) against a spring bias, said control piston (19) being provided with a metering restriction (21) and cooperating with a first housing outlet (15, 16) connecting said housing bore (8) to one portion (2a) of said flow passage (2) in the controlled-flow mode, and further comprising a unrestricted flow path (15, 16, 17, 18) extending through both portions (2a, 2b) of said flow passage (2) and said first housing outlet (15, 16) in the uncontrolled flow mode with said control piston (19) displaced to a passive position, characterized by the combination of the following characteristics:

a) a thickened exteriorly screw-threaded section (14) of said housing (6, 6′, 6″) is formed with a second housing outlet (17, 18) connecting said housing bore (8) to the other portion (2b) of said flow passage (2),
b) said second housing outlet (17, 18) is adapted to be opened by said control piston (19) on attaining its passive position,
c) in the passive position said control piston (19) is spaced by a distance (s) from the end (11b) of a spring (11) acting thereon during its control displacements, and
d) said unrestricted flow path (15, 16, 17, 18) bypasses said control piston (19) between the two portions (2a, 2b) of said flow passage (2).

2. A flow limiting valve according to claim 1, characterized in that said end (11b) of said spring (11) acting on said control piston (19) during its control displacement is adapted to be retained by a preferably adjustable stop (29a) in the direction of displacement of said control piston towards its passive position.

3. A flow limiting valve according to claim 2, characterized in that a pull rod (27, 28) is disposed in said housing (6′) to extend through said spring (11) and carrying said stop (29a), and that said pull rod (27, 28) is adapted to be pushed out of said housing (6′) opposite to the direction of displacement of said control piston (19) towards its passive position.

4. A flow limiting valve according to any of claims 1 to 3, characterized in that said control piston (19) is provided with a piston rod (29) projecting out of said housing (6″) and on which the second end (11b) of said spring (11) is supported, the first end (11a) thereof being supported by said housing (6″), and that said first end (11a) of said spring (11) engages a stop member (33) adapted on displacement of said control piston (19) in the direction towards its passive position to be lifted off said housing (6″) by a distance (s) a counterstop (34) provided on said piston rod (29).

## Revendications

1. Limiteur de débit (1), en particulier limiteur de débit formant frein de descente pour l'hydraulique à haute pression, présentant un débit réglé quantitativement dans un sens d'écoulement et un débit ni réglé ni étranglé dans le sens opposé, et comprenant un corps (6, 6′, 6″) en forme de pot qui, vissé dans un passage d'écoulement (2) présentant deux raccords, divise le passage d'écoulement (2) en deux parties (2a, 2b), un piston régulateur (19) qui, susceptible de coulisser de façon limitée à l'intérieur du corps (6, 6′, 6″) dans un alésage (8) de celui-ci à l'encontre de la force d'un ressort, présente un orifice de mesure (21, 21′) et coopère en cas de débit réglé, à la manière d'un diaphragme de réglage, avec une première sortie du corps (15, 16) s'étendant à partir de l'alésage (8) du corps jusqu'à l'une (2a) des parties du passage d'écoulement (2), et une voie d'écoulement non étranglée (15, 16, 17, 18) qui, en cas de débit non réglé et le piston régulateur (19) ayant été amené par coulissement dans une position passive, s'étend par les deux parties (2a, 2b) du passage d'écoulement (2) et par la première sortie du corps (15, 16), caractérisé par la combinaison des caractéristiques suivantes:

a) dans une partie élargie (14) à filetage extérieur du corps (6, 6′, 6″) est ménagée une seconde sortie (17, 18) du corps, laquelle s'étend de l'alésage (8) du corps à l'autre partie (2b) du passage d'écoulement (2);
b) la seconde sortie (17, 18) du corps peut être libérée par le piston régulateur (19) lorsque celui-ci atteint sa position passive;
c) dans la position passive le piston régulateur (19) se trouve soulevé d'une distance (s) de l'extrémité (11b) du ressort (11), laquelle s'applique sur lui lors du mouvement de réglage; et
d) la voie d'écoulement non étranglée (15, 16, 17, 18) contourne le piston régulateur (19) extérieurement entre les deux parties (2a, 2b) du passage d'écoulement (2).

2. Limiteur de débit selon la revendication 1, caractérisé en ce que l'extrémité (11b) du ressort (11), laquelle s'applique sur le piston régulateur (19) lors de son mouvement régulateur, peut être interceptée, dans le sens de mouvement du piston régulateur en direction de sa position passive, au niveau d'une butée de préférence réglable (29a).

3. Limiteur de débit selon la revendication 2, caractérisé en ce que dans le corps (6') est montée une barre de traction (27, 28) qui traverse le ressort (11) et porte la butée (29a) et en ce que la barre de traction (27, 28) peut être glisée hors du corps (6') dans le sens opposé au sens de mouvement du piston régulateur (19) en direction de sa position passive.

4. Limiteur de débit selon l'une quelconque des revendications précédentes, caractérisé en ce que sur le piston régulateur (19) est montée une tige de piston (29) faisant saillie hors du corps (6") et sur laquelle s'appuie la seconde extrémité (11b) du ressort (11) prenant appui avec sa première extrémité (11a) sur le corps (6"), et en ce que la première extrémité (11a) du ressort (11) repose sur une butée (33) qui, lors d'un mouvement du piston régulateur (19) en direction de sa position passive, peut être entraînée par une butée (34) montée sur la tige de piston (29), et être soulevée du corps (6") de la distance (s).

FIG.1

FIG.2A

FIG.2B

Fig.3

Fig.4